# EUROPEAN PATENT SPECIFICATION

(11) **EP 2 276 689 B1**
(45) Date of publication and mention of the grant of the patent: **07.12.2016**
(21) Application number: 08763825.0
(22) Date of filing: 21.04.2008
(51) Int. Cl.: B62D 6/00, B66F 17/00, B66F 9/075, B62D 5/00, B66F 9/24

(54) **SAFETY SYSTEM FOR COUNTERBALANCED LIFT TRUCKS AND SIMILAR VEHICLES**
SICHERHEITSSYSTEM FÜR EINEN GEGENGEWICHTSSTAPLER UND ÄHNLICHE FAHRZEUGE
SYSTÈME DE SÉCURITÉ POUR CHARIOTS ÉLÉVATEURS À CONTREPOIDS ET VÉHICULES SIMILAIRES

(43) Date of publication of application: 26.01.2011
(73) Proprietor: TOYOTA MATERIAL HANDLING MANUFACTURING ITALY S.p.A, 40132 Bologna (IT)
(72) Inventor: CAMPI, Angelo, E-62019 Recanati (IT)
(74) Representative: Firmati, Leonardo
(86) International application number: PCT/IT2008/000273
(87) International publication number: WO 2009/130718

(56) References cited:
- EP-A- 1 167 638
- EP-A- 1 532 065
- EP-A- 1 813 569
- WO-A-03/010040
- WO-A-2007/036767
- DE-A1-102006 035 863

## Description

### Technical Field

The present invention relates to a safety system for counterbalanced lift trucks and similar vehicles. In particular, the present invention relates to a safety system designed to guarantee stable movement of a counterbalanced lift truck, and in more detail it is designed to prevent truck lateral and longitudinal tipping.

### Background Art

Said safety device can be installed on any type of lift truck or similar vehicle, such as a reach truck or a stacker, etc. Hereinafter reference is made to a safety device for counterbalanced lift trucks, without thereby restricting the scope of the invention.

A standard configuration has a chassis with two axles, one front axle and one rear, steering axle.

In general, the front axle has two wheels near a lifting apparatus located at the front end of the chassis.

At the rear, the truck may have one or more counterweights connected to the chassis. The rear steering axle may have two wheels transversally distanced from one another, similarly to the front axle, or it may have two wheels set close together, also called twin wheels, which rotate about a shared vertical axis, or even, alternatively, it may comprise a single rear wheel located in the longitudinal centre line of the truck and also able to rotate relative to a vertical axis.

The lifting apparatus usually comprises a pair of forks, able to move from a lowered position to a raised position and vice versa using a mast, driven by one or more hydraulic lifting pistons.

Lift trucks are often used for moving significant masses which reduce truck stability due to the particular distribution of the weights established depending on the supporting surface formed by the wheels.

Said reduced stability, also depending on dynamic phenomena caused by the longitudinal and transversal accelerations to which the truck is subject during operation, may cause the truck to tip over or the mass supported by the forks to fall.

In particular, when a lift truck moves on level ground, the main cause of lateral tipping is a turning radius which is too small relative to the speed of movement.

A problem which has been very noticeable recently is the high number of accidents at work, some fatal, caused by increasingly extreme loading and unloading work paces which often result in operators performing delicate manoeuvres at high speeds, with the risk of their vehicle tipping over.

Many devices have been examined, intended to increase the safety of lift trucks, in particular devices designed to reduce the risk of trucks tipping over.

Most of said prior art devices are intended to evaluate the load situation, from one moment to the next, using measurements only on the front lifting apparatus.

However, these solutions do not provide a true image of the overall stability of the vehicle, the load and supporting surface.

Other solutions involve visual and acoustic safety devices which warn the operator of an impending dangerous situation. But such devices may not be entirely effective, since workplaces are often noisy and the operator might not notice light signals because all his attention has to be focused on performing a driving manoeuvre.

It is also known from documents WO 2007/036767 and EP 1813569 safety system for counterbalanced lift truck which comprises a control unit having a control encoder connected to a steering wheel - steering column unit of a lift truck steering device, a controller which controls actuator means for directing the truck according to the rotation imparted to the steering wheel - steering column unit by an operator, based on signals supplied to the controller by the encoder, means for opposing rotation of the steering wheel - steering column unit, sensor means for instantaneous identification of the weight of the load lifted, means for instantaneous measurement of the truck speed of movement.

### Disclosure of the Invention

Therefore, the present invention has for an aim to overcome the above-mentioned disadvantages by providing a safety system for counterbalanced lift trucks which can effectively and infallibly guarantee vehicle stability, mainly lateral stability, in any operating condition without the need for intervention by the operator.

Accordingly, said aim is achieved by a safety system for counterbalanced lift trucks as described in claim 1.

The dependent claims relate to preferred, advantageous embodiments of the invention.

### Brief Description of the Drawings

The technical features of the invention, in accordance with the afore-mentioned aims, are clearly indicated in the claims herein and the advantages of the invention are more evident in the detailed description which follows, with reference to the accompanying drawings, which illustrate a preferred embodiment without limiting the scope of the invention, in which:
Figure 1 is a front view of a lift truck equipped with a safety device in accordance with the present invention;
Figure 2 is a plan view of the truck suspension apparatus showing the truck front and rear axles and the respective stability triangle;
Figure 3 is a side view of the lift truck of Figure 1;
Figure 4 is a block diagram relative to the connections of the various components of the safety system in accordance with the present invention.

### Detailed Description of the Preferred Embodiments of the Invention

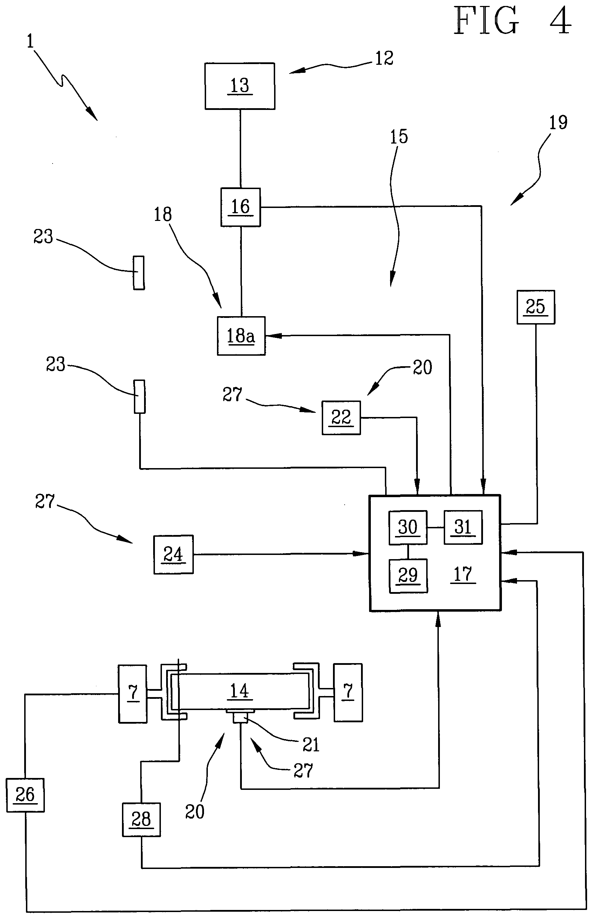

In particular with reference to Figure 4, the numeral 1 denotes as a whole a safety or anti-tipping system for a counterbalanced lift truck 2.

The lift truck 2, of the substantially known type and therefore described only with reference to those parts necessary for understanding this text, comprises a chassis 3 supported by a front axle 4 and a rear axle 5 fitted with respective wheels 6 and 7 and a truck 2 driving position 2a, protected by a cabin or by a guard for the driver.

The description which follows considers the general case of a four-wheeled truck 2 in which the front wheels 6 are driving, not steering ground wheels and the rear wheels 7 are directional for steering. The following considerations apply irrespective of whether the counterbalanced truck has three or four wheels. The behaviour is similar in both cases, since trucks rest on the ground on three points irrespective of the number of wheels. For four-wheeled trucks it is important to distinguish between two cases:
- if the rear wheels are transversally distanced from each other like the front wheels, the rear steering axle is connected to the chassis by a pin which allows it to oscillate to adjust to the irregularities of the ground;
- if the rear steering ground wheels are twinned, the way in which the truck rests on the ground may be represented by a triangle with the base of the triangle lying on the axis of the front axle and the other two sides passing through the centres, shown in plan view, of the front wheels and those of the rear wheels respectively.

Therefore, the truck rests on the ground on three points even if it has four wheels.

The truck 2 has a lifting apparatus 8 located at the front wheels 6 and substantially comprising a mast 9 which tilts relative to the chassis 3 (swinging movement). A slide 10 driven by a piston 11, for example hydraulic, slides along the mast 9 from the bottom upwards and from the top downwards.

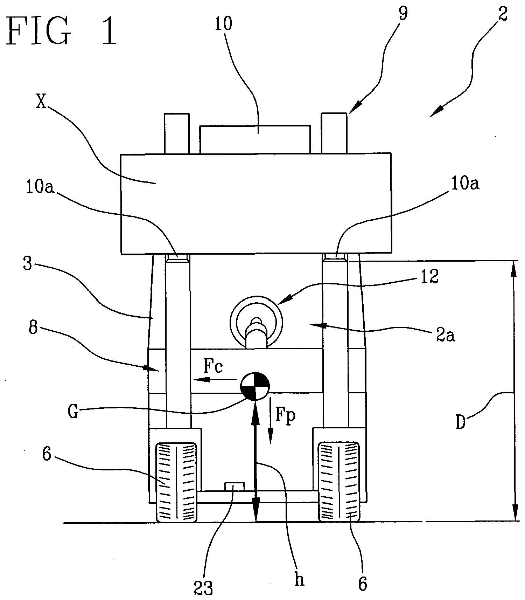

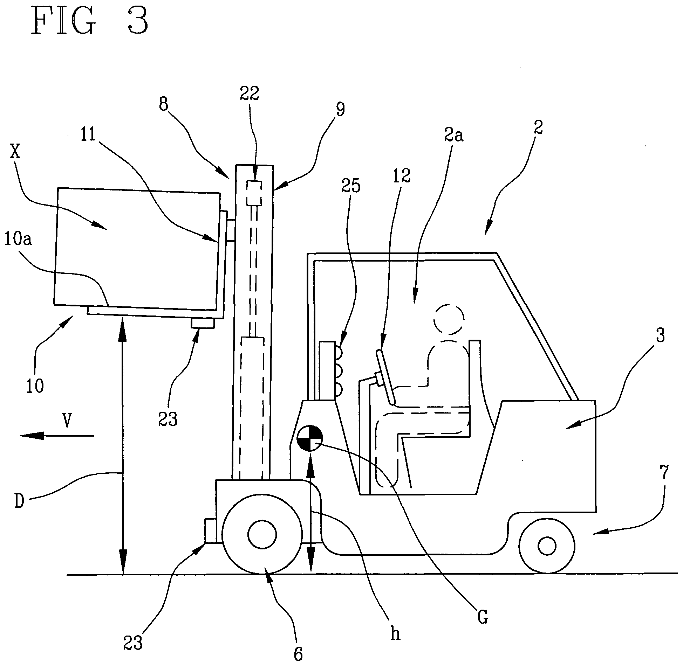

The slide 10 advantageously consists of two forks 10a set up to support and move a respective load X shown in Figures 1 and 3.

The truck 2 comprises a steering device 12, comprising a steering wheel - steering column unit 13 controlled by the operator. The steering device 12 also comprises actuator means 14 for directing the truck 2 in the direction imparted by the operator to the steering wheel - steering column unit 13.

Said actuator means 14 are preferably mechanically or hydraulically isolated from the steering wheel - steering column unit 13.

The safety system 1 comprises a control unit 15, comprising a control encoder 16 connected to the steering wheel - steering column unit 13 and a controller 17 which controls the actuator means 14 for directing the truck based on the signals supplied to the controller 7 by the control encoder 16.

The safety system 1 also comprises means 18 opposing rotation of the steering wheel - steering column unit 13, which, as explained below, create a resisting torque opposing the rotation of the steering wheel - steering column unit 13.

According to substantially known architectures, the truck 2 comprises a communication network 19 (for example of the CAN-BUS or CAN-OPEN type) supporting most instructions and information relative to truck 2 operation, that is to say, the main operating parameters and commands set by a driver for the truck 2.

The controller 17 has an interface for connection to the truck 2 CAN BUS or CAN OPEN type communication network 19.

As described below, the system 1 interacts with truck 2 dynamics using the communication channel 19.

Figure 4 in particular shows how the device 1 comprises sensor means 20 for ascertaining information relative to the load X lifted by the slide 10. In particular, said sensor means 20 instantly detect the weight of the load X lifted by the fork 10a.

The sensor means 20 have a weight sensor 21, for example a load cell, for ascertaining the weight on the truck 2 rear axle 5, and a pressure switch 22, connected to the truck hydraulic system, for detecting the weight of the load X lifted by the fork 10a.

There is also a measuring device 23 for measuring the height D reached by the fork 10a. Said height measuring device 23 is preferably an ultrasonic sensor, of the known type and therefore not described in further detail.

The safety system 1 also comprises a potentiometer 24 for measuring the mast 9 swinging angle and an LED visual indicator 25, located in the driving position 2a, which alerts the operator to a dangerous condition.

There are also means 26 for measuring the truck 2 speed of movement, for example an encoder.

The sensor means 20, and therefore the weight sensor 21 and the pressure switch 22, the height measuring device 23 and the potentiometer 24 are part of a device 27 for identifying the truck 2 centre of gravity G in any load condition. Said device 27 can identify the instantaneous position of the centre of gravity.

On the rear steering axle 5 journal articulated joint pin there are means 28 for instantly measuring the steering angle. Said means 28 preferably comprise a potentiometer.

The system also has an analogue - digital converter 29 for converting the weight, height D and steering angle values from analogue values into digital values.

A logic and calculation unit 30, integrated in the control unit 15 and in particular in the controller 17, processes all of the data supplied, from one moment to the next, by the various sensors and detector means previously described, to suitably activate the opposing means 18.

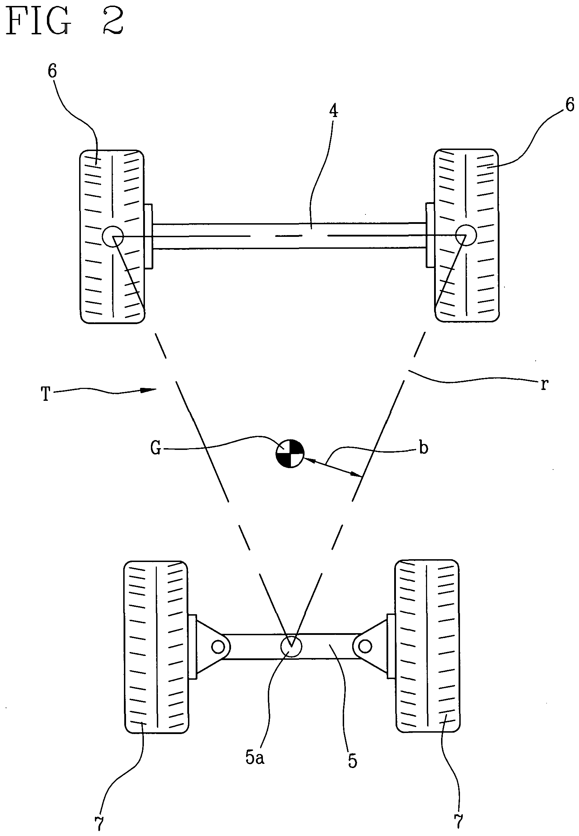

As illustrated in Figure 2, the truck 2 ideally has a stability triangle T, within which the projection of the centre of gravity G must always be contained, so as to guarantee truck 2 stability.

More precisely, the condition of lateral stability is always established as long as the truck stabilising moment is greater than the truck tipping moment.

The stabilising moment Mₛ is given by the product of the weight force Fₚ of the entire truck, including the load, multiplied by the weight force stabilising arm b, measured relative to an axis r about which tipping occurs.

The weight force Fₚ of the entire truck is given by the product of the mass m of the truck, including the load, multiplied by the gravity acceleration g.

With reference to Figure 1, the tipping moment Mᵣ is given by the product of the centrifugal force F_{c} applied to the truck 2 centre of gravity G during steering multiplied by the height h of the centre of gravity G from the ground.

The centrifugal force F_{c} is given by the product of the mass m of the truck, including the load, multiplied by the centrifugal acceleration given by the formula v²/R, where v is the truck 2 speed of movement and R is the truck 2 turning radius.

Therefore, the condition of stability is given by the formula Fₚ ·b > F_{c} ·h that is to say mgb > m v²/R·h.

Therefore, as can be seen, there are many parameters which affect stability on a bend. For a predetermined truck 2 there is no single turning radius R, depending on the speed of movement v, which guarantees avoiding truck 2 lateral tipping.

Stability conditions vary depending on the load placed on the fork 10a, the height above the ground reached by said load, the dimensions of the vehicle.

The safety system 1 disclosed allows the above-mentioned stability relation to always be established, since a predetermined safety parameter P is introduced, between 0.7 and 0.9, preferably equal to 0.8.

Therefore, the above-mentioned stability relation becomes Mᵣ = P·Mₛ, or in other words the Mᵣ/Mₛ ratio must at the most be equal to P.

For simplicity the centre of gravity of the truck, unloaded or loaded, is considered to be in the truck 2 middle vertical longitudinal plane. The safety parameter P takes into account the actual situation in which the centre of gravity G may not be in the truck 2 middle vertical longitudinal plane.

The weight force is known, since the weight of the unloaded truck is known as is that of the load lifted, deduced from the weight acting on the forks 10a evaluated by the pressure switch 22, which causes the increase in pressure in the hydraulic lifting circuit.

The position of the centre of gravity in plan view is known, as is the position of the axis r about which potential tipping occurs. Therefore, the weight force arm b is identified.

The centrifugal force is calculated as follows: the encoder 26 identifies the truck 2 speed of movement, whilst the radius of curvature R can be measured by the potentiometer 28 installed on the rear axle 5 journal pin. The height h of the centre of gravity of the system consisting of the truck with the load, if any, is calculated, from one moment to the next, since the masses of the truck and the load are known, as are the distances between their centres of gravity and the ground.

The logic and calculation unit 30 processes all of the instantaneous data relative to the steering angle, the position of the centre of gravity, the speed of movement and the total weight of the truck to activate the opposing means 18 when the ratio between the tipping moment and the stabilising moment is equal to the predetermined value. The selected predetermined value of 0.8 is a safety parameter.

The logic and calculation unit 30 communicates with the controller 17 to activate the opposing means 18, so that the latter supply to the steering wheel - steering column unit 13 an opposing resisting torque whose intensity varies depending on the value of the ratio between the tipping moment and the stabilising moment.

Mechanically connected to the steering wheel - steering column unit 13, the opposing means 18 comprise an electromagnetic clutch 18a controlled by the controller 17. The electromagnetic clutch generates said opposing torque.

In particular, when the ratio between the tipping moment and the stabilising moment reaches a value close to or equal to 0.8, the logic and calculation unit 30 controls the opposing means in the way previously described, that is to say, the opposing means are activated to increase the resistance offered by the steering wheel to the rotation set by the truck operator. The ratio between the number of revolutions of the steering wheel and the steering angle described by the directional wheels increases.

In addition, as the ratio between the tipping moment and the stabilising moment approaches the safety value 0.8, the logic and calculation unit 30 may communicate with the controller 17 to reduce the truck 2 speed of movement. Therefore, as the steering angle increases the speed of movement is reduced. The operator immediately becomes aware that it is more difficult to follow tortuous paths and almost automatically reduces the speed of movement.

The system does not intervene if manoeuvres are performed with a low speed of movement, for example when the steering wheel must frequently be adjusted due to limited spaces.

In the absence of the mechanical connection between the steering wheel and the directional ground wheels, one of the main functions of the clutch is to transmit to the operator the same driving sensations that he would have with a conventional steering system: a greater or lesser resistance when turning the steering wheel, depending on the hindrance, the irregularity of the ground and the resistance encountered by the wheels when describing the steering angle. Moreover, this type of clutch allows the operator to feel the mechanical end of stroke when the wheel reaches the full lock position. If the operator moves the steering wheel - steering column unit 13, the control encoder 16 transmits a signal to the control unit 15, indicating the desired steering angle. The information about the steering angle also reaches the logic and calculation unit 30, integrated in the control unit 15 controller 17.

Through the actuator means 14, the control unit 15 achieves the steering angle proportional to the number of revolutions described by the steering wheel - steering column unit 13. A control board 31 integrated in the controller 17 and operating in conjunction with the logic and calculation unit 30 converts the number of revolutions of the steering wheel - steering column unit 13 into a command to activate the actuator means 14.

The potentiometer 28, installed on the journal articulated joint pin measures the angle described and indicates it to the controller 17, which intervenes eliminating any differences between the position reached and that expected.

As regards the actuator means 14, or steering actuator, it is important to distinguish between a truck 2 with four wheels and a three-wheeled truck. In the case of a four-wheeled truck 2, whose two rear steering ground wheels are transversally distanced from each other like the front wheels, the hydraulic cylinder for steering could be substituted by a worm screw actuator with recirculating balls, driven by an integrated electric motor. In the case of a truck 2 with three wheels (or four, where the two rear steering ground wheels are twinned), the hydrostatic steering motor or the rack/pinion device, hydraulically driven, could be substituted by a double-stage electric motor, with results similar to the previous four-wheeled solution.

In both types of actuators referred to, the increase in current intensity required to generate a torque needed to overcome the hindrance opposing the wheel steering action is suitably used to control the electromagnetic clutch 18a, or more generally the opposing means 18, connected to the steering wheel - steering column unit 13, so that through the steering wheel the operator is provided with the feedback typical of conventional mechanical steering.

If the connection between the steering wheel - steering column unit 13 and the actuator means 14 is made through the CAN BUS or CAN OPEN type communication network 19, it is possible to introduce a filter, so as to prevent an inexperienced operator from performing operations considered dangerous to lateral stability.

For example, a resistance could be created that opposes a rotation of the steering wheel which is considered too fast, to prevent the operator from negotiating a bend with a radius that is too small relative to the truck speed of movement.

Moreover, it may be set up so that as the speed of movement increases and irrespective of the other parameters, the resistance the operator encounters when steering gradually increases, meaning that the operator is induced to reduce the speed according to the tortuousness of the path to be covered.

Moreover, the same aim may be achieved by varying the ratio between the number of revolutions of the steering wheel and the steering angle described: as the speed of movement increases the number of revolutions of the steering wheel required to achieve the same steering angle also increases.

Moreover, as already indicated, to make the truck 2 response to the various situations it may encounter more suitable, in addition to what has already been described it is possible to set up the system so that as the steering angle increases the truck 2 speed of movement is automatically reduced.

Irrespective of how many wheels the truck 2 has, the safety system 1 disclosed can also send a danger signal to the operator which is displayed by the visual indicator 25, when the weight of the load X approaches the maximum allowed relative to the height reached by the forks 10a. At the same time, the system 1 can also gradually reduce the lifting speed until the total stop limit situation is reached.

The system can also guarantee truck 2 longitudinal stability.

When the longitudinal tipping moment due to the weight, the position of the centre of gravity or effects deriving from load lifting approaches the maximum allowed, the system slows then stops the function which caused said event.

Various situations may arise during the operating cycle depending on the load condition.

In the case of a moving truck, with no load on the fork, the safety system 1 intervenes by applying a braking action to rotation of the steering wheel when the truck speed of movement is quite high. This system behaviour has two effects. First, it prevents steering which is too fast, not compatible with lateral stability due to the high speed of movement. However, a bend with the smallest possible radius can be negotiated in safe conditions. Second, the system 1 obliges the operator to adopt a slower speed of movement if bends with a smaller turning radius must be negotiated.

In the case of a moving truck, with a load on the forks in a low position (D≤300mm), if the load is compatible with the truck capacity and if the operator must perform the same operations as described above, the safety system 1 does not intervene very often, or, probably, does not intervene at all since the truck is more stable when negotiating a bend.

In the case of a moving truck, with a load on the forks in a high position (300mm<D<1000mm), all conditions being equal relative to the previous cases considered, the safety system 1 intervenes much more often. The truck reduces the speed of movement so as to eliminate longitudinal instability, the safety system 1 intervenes, applying a stronger braking action to the rotation of the steering wheel to prevent lateral instability. Lateral stability is made worse by the fact that the centre of gravity of the load on the forks is raised. In this situation the truck operating speed is lower proportionally to the increase in the critical nature of the conditions of use, and it is certainly less than that seen in the previous cases. This is understandable because the truck is not operating in "normal operating conditions". But truck behaviour is still safe, irrespective of the skill and experience of the operator.

Finally, in the case of a moving truck, with a load on the forks at a height D> 1000mm, the safety system 1 intervenes, allowing this operating step to be performed with extremely slow movements, at the limit of what is acceptable, but still safe. This condition should be considered truly exceptional. Movement is not permitted for excessive fork heights or loads.

The safety system 1 described above allows safe driving of a counterbalanced lift truck with three or four driving wheels, guaranteeing both lateral and longitudinal stability in any operating and load condition.

The system disclosed can prevent dangerous movements by the load if the truck is overloaded either due to excessive maximum load for use, or if the moment is exceeded due to said load.

Moreover, the system disclosed can also prevent dangerous movements by the load if moments tending towards longitudinal tipping in particular due to a raised load are exceeded.

Lateral stability on bends is guaranteed because the safety system prevents failure of the stability condition referred to, that is to say Fₚb > F_{c}h, having set as the limit condition, at which the system operates as previously described, Fₚb = 0.8 F_{c}h.

A system such as that described can also be used for "Steer by wire".

Said system provides the highest possible level of ergonomics because it allows the steering column to be placed right where the operator's anthropomorphic measurements require it.

There are no mechanical connections between the steering wheel and the directional ground wheels putting any constraints on device positioning.

It is known that ergonomic driving has the advantage of being less tiring for the operator. For this reason it also becomes safer because it allows a high level of attention to be maintained in all circumstances, even at the end of a shift when tiredness my cause unwelcome mishaps or even accidents.

## Claims

1. A safety system for a counterbalanced lift truck comprising a control unit (15) which comprises a control encoder (16) connected to a steering wheel - steering column unit (13) of a lift truck (2) steering device (12), a controller (17) which controls actuator means (14) for directing the truck (2) according to the rotation imparted to the steering wheel - steering column unit (13) by an operator, based on signals supplied to the controller (17) by the encoder (16), means (18) for opposing rotation of the steering wheel - steering column unit (13), sensor means (20) for instantaneous identification of the weight of the load lifted, means (26) for instantaneous measurement of the truck speed of movement, means (28) for instantaneous identification of the steering angle, a device (27) for instantaneous identification of the position of the truck (2) centre of gravity (G) and a logic and calculation unit (30) designed to process the data relative to the steering angle, the position of the centre of gravity, the speed of movement and the total weight of the truck so as to activate the opposing means (18) when the ratio between the tipping moment (Mᵣ) and the stabilising moment (Mₛ) is equal to a predetermined value (P); the safety system being **characterised in that** the device (27) for identification of the position of the truck (2) centre of gravity (G) comprises: a load cell (21) for measuring the weight of the load on the truck (2) rear axle (5), a pressure switch (22) connected to a truck (2) hydraulic system for detecting the weight of the load (X) lifted by the truck (2), a height measuring device (23) for measuring the height (D) reached by the fork (10a) and a potentiometer (24) for measuring the mast (9) swinging angle.

2. The safety system according to claim 1, **characterised in that** the predetermined value (P) is between 0.7 and 0.9, preferably being 0.8.

3. The safety system according to either of the foregoing claims, **characterised in that** the logic and calculation unit (30) communicates with the controller (17) so that the opposing means (18) provide an opposing torque resisting rotation of the steering wheel - steering column unit (13), its intensity varying depending on the value of the ratio between the tipping moment (Mᵣ) and the stabilising moment (Mₛ).

4. The safety system according to any of the foregoing claims, **characterised in that** the means (18) for opposing rotation of the steering wheel - steering column unit (13) comprise an electromagnetic clutch (18a) connected to the steering wheel - steering column unit (13) and controlled by the controller (17); the electromagnetic clutch (18a) generating a resisting torque opposing the effort applied by the operator on the steering wheel - steering column unit (13), the intensity of said torque varying depending on the value of the ratio between the tipping moment (Mᵣ) and the stabilising moment (Mₛ).

5. The safety system according to any of the foregoing claims, **characterised in that** the logic and calculation unit (30) communicates with the controller (17) to reduce the truck (2) speed depending on the value of the ratio between the tipping moment (Mᵣ) and the stabilising moment (Mₛ).

6. The safety system according to any of the foregoing claims, **characterised in that** the logic and calculation unit (30) is integrated in the control unit (15).

7. The safety system according to any of the foregoing claims, **characterised in that** it comprises a control board (31) integrated in the logic and calculation unit (30), which converts the number of revolutions of the steering wheel - steering column unit (13) into a command for activating the actuator means (14).

8. The safety system according to any of the foregoing claims, **characterised in that** the actuator means (14) are mechanically isolated from the steering wheel - steering column unit (13).

9. The safety system according to any of the foregoing claims, **characterised in that** the controller (17) has an interface for connection to a truck (2) CAN BUS or CAN OPEN type communication network (19).

10. The safety system according to any of the foregoing claims, **characterised in that** the means (28) for instantaneous identification of the steering angle comprise a potentiometer positioned on a truck (2) rear steering axle (5) journal articulated joint pin.

11. A counterbalanced lift truck, **characterised in that** it comprises a safety system according to any of the claims from 1 to 10.

## Patentansprüche

1. Sicherheitssystem für einen Gegengewichtsstapler, umfassend eine Steuereinheit (15), die einen Steuerungsencoder (16) umfasst, der mit einer Lenkrad-/Lenksäuleneinheit (13) einer Lenkvorrichtung (12) eines Staplers (2) verbunden ist, eine Steuerung (17), die Betätigungsmittel (14) zum Lenken des Staplers (2) nach der der Lenkrad-/Lenksäuleneinheit (13) durch einen Bediener verliehenen Drehung steuert, basierend auf der Steuerung (17) durch den Encoder (16) übermittelten Signalen, Mittel (18), um der Drehung der Lenkrad-/Lenksäuleneinheit (13) entgegenzuwirken, Sensormittel (20) zur sofortigen Erkennung des Gewichts der gehobenen Last, Mittel (26) zur sofortigen Messung der Fahrgeschwindigkeit des Staplers, Mittel (28) zur sofortigen Erkennung des Lenkeinschlagwinkels, eine Vorrichtung (27) zur sofortigen Erkennung der Position des Schwerpunkts (G) des Staplers (2) und eine Logik- und Kalkulationseinheit (30), die ausgestaltet ist, um die Daten in Bezug auf Lenkeinschlagwinkel, Schwerpunktposition, Fahrgeschwindigkeit und Gesamtgewicht des Staplers zu verarbeiten, sodass die entgegenwirkenden Mittel (18) aktiviert werden, wenn das Verhältnis zwischen Kippmoment (Mᵣ) und Stabilisierungsmoment (Mₛ) gleich einem vorgegebenen Wert (P) ist, wobei das Sicherheitssystem **dadurch gekennzeichnet ist, dass** die Vorrichtung (27) zur Erkennung der Position des Schwerpunkts (G) des Staplers (2) umfasst: eine Wägezelle (21) zum Messen des Gewichts der Last auf der Hinterachse (5) des Staplers (2), einen Druckschalter (22), der mit einem Hydrauliksystem des Staplers (2) verbunden ist, um das Gewicht der vom Stapler (2) gehobenen Last (X) zu erfassen, eine Höhenmesseinrichtung (23) zum Messen der von der Gabel (10a) erreichten Höhe und ein Potenziometer (24) zum Messen des Schwenkwinkels des Hubmasts (9).

2. Sicherheitssystem nach Anspruch 1, **dadurch gekennzeichnet, dass** der vorgegebene Wert (P) zwischen 0,7 und 0,9, vorzugsweise 0,8, beträgt.

3. Sicherheitssystem nach einem der vorhergehenden Ansprüche, **dadurch gekennzeichnet, dass** die Logik- und Kalkulationseinheit (30) mit der Steuerung (17) kommuniziert, sodass die entgegenwirkenden Mittel (18) ein Widerstandsmoment bereitstellen, das der Drehung der Lenkrad-/Lenksäuleneinheit (13) entgegenwirkt, dessen Intensität abhängig vom Wert des Verhältnisses zwischen Kippmoment (Mᵣ) und Stabilisierungsmoment (Mₛ) variiert.

4. Sicherheitssystem nach einem der vorhergehenden Ansprüche, **dadurch gekennzeichnet, dass** die Mittel (18) zum Entgegenwirken der Drehung der Lenkrad-/Lenksäuleneinheit (13) eine elektromagnetische Kupplung (18a) umfassen, die mit der Lenkrad-/Lenksäuleneinheit (13) verbunden ist und über die Steuerung (17) gesteuert wird, wobei die elektromagnetische Kupplung (18a) ein Widerstandsmoment erzeugt, das der Kraft entgegenwirkt, die der Bediener auf die Lenkrad-/Lenksäuleneinheit (13) ausübt, wobei die Intensität dieses Moments abhängig vom Wert des Verhältnisses zwischen Kippmoment (Mᵣ) und Stabilisierungsmoment (Mₛ) variiert.

5. Sicherheitssystem nach einem der vorhergehenden Ansprüche, **dadurch gekennzeichnet, dass** die Logik- und Kalkulationseinheit (30) mit der Steuerung (17) kommuniziert, um die Geschwindigkeit des Staplers (2) abhängig vom Wert des Verhältnisses zwischen Kippmoment (Mᵣ) und Stabilisierungsmoment (Mₛ) zu reduzieren.

6. Sicherheitssystem nach einem der vorhergehenden Ansprüche, **dadurch gekennzeichnet, dass** die Logik- und Kalkulationseinheit (30) in der Steuereinheit (15) integriert ist.

7. Sicherheitssystem nach einem der vorhergehenden Ansprüche, **dadurch gekennzeichnet, dass** sie eine Schalttafel (31) umfasst, die in die Logik- und Kalkulationseinheit (30) integriert ist, die die Zahl der Umdrehungen der Lenkrad-/Lenksäuleneinheit (13) in einen Befehl zur Aktivierung der Betätigungsmittel (14) umwandelt.

8. Sicherheitssystem nach einem der vorhergehenden Ansprüche, **dadurch gekennzeichnet, dass** die Betätigungsmittel (14) mechanisch von der Lenkrad-/Lenksäuleneinheit (13) isoliert sind.

9. Sicherheitssystem nach einem der vorhergehenden Ansprüche, **dadurch gekennzeichnet, dass** die Steuerung (17) eine Schnittstelle für den Anschluss eines Kommunikationsnetzwerks (19) des Staplers (2) vom Typ CAN BUS oder CAN OPEN aufweist.

10. Sicherheitssystem nach einem der vorhergehenden Ansprüche, **dadurch gekennzeichnet, dass** die Mittel (28) zur sofortigen Erkennung des Lenkeinschlagwinkels ein Potenziometer umfassen, das auf einer Gelenklagerzapfenverbindungsstift der Hinterlenkachse (5) des Staplers (2) positioniert ist.

11. Gegengewichtsstapler, **dadurch gekennzeichnet, dass** er ein Sicherheitssystem nach einem der Ansprüche 1 bis 10 umfasst.

## Revendications

1. Système de sécurité pour un chariot élévateur à contrepoids comprenant une unité de commande (15) qui comprend un encodeur de commande (16) relié à un groupe volant-colonne de direction (13) d'un dispositif de direction (12) du chariot élévateur (2), un contrôleur (17) contrôlant des moyens actionneurs (14) pour diriger le chariot (2), selon la rotation donnée par un opérateur au groupe volant-colonne de direction (13), sur la base de signaux fournis au contrôleur (17) par l'encodeur (16), des moyens (18) antagonistes à la rotation du groupe volant-colonne de direction (13), des moyens de détection (20) pour la détermination instantanée du poids de la charge soulevée, des moyens (26) pour la mesure instantanée de la vitesse de déplacement du chariot, des moyens (28) pour la détermination instantanée de l'angle de braquage, un dispositif (27) pour la détermination instantanée de la position du centre de gravité (G) du chariot (2) ainsi qu'une unité logique et de calcul (30) conçue pour traiter les données relatives à l'angle de braquage, la position du centre de gravité, la vitesse de déplacement et le poids total du chariot de sorte à actionner les moyens antagonistes (18) lorsque le rapport entre le moment de basculement (Mᵣ) et le moment de stabilisation (Mₛ) est égal à une valeur prédéfinie (P) ; le système de sécurité étant **caractérisé en ce que** le dispositif (27) de détermination de la position du centre de gravité (G) du chariot (2) comprend : un capteur à jauge (21) destiné à mesurer le poids de la charge sur l'essieu arrière (5) du chariot (2), un pressostat (22) relié à un système hydraulique du chariot (2) pour détecter le poids de la charge (X) soulevée par le chariot (2), un dispositif de mesure de la hauteur (23) destiné à mesurer la hauteur (D) atteinte par la fourche (10a) et un potentiomètre (24) destiné à mesurer l'angle de rotation du mât élévateur (9).

2. Système de sécurité selon la revendication 1, **caractérisé en ce que** la valeur prédéfinie (P) est comprise entre 0,7 et 0,9, de préférence égale à 0,8.

3. Système de sécurité selon l'une quelconque des revendications précédentes, **caractérisé en ce que** l'unité logique et de calcul (30) communique avec le contrôleur (17) de sorte que les moyens antagonistes (18) fournissent un couple résistant antagoniste à la rotation du groupe volant-colonne de direction (13), son intensité variant selon la valeur du rapport entre le moment de basculement (Mᵣ) et le moment de stabilisation (Mₛ).

4. Système de sécurité selon l'une quelconque des revendications précédentes, **caractérisé en ce que** les moyens (18) antagonistes à la rotation du groupe volant-colonne de direction (13) comprennent un embrayage électromagnétique (18a) relié au groupe volant-colonne de direction (13) et commandé par le contrôleur (17) ; l'embrayage électromagnétique (18a) générant un couple résistant antagoniste à l'effort appliqué par l'opérateur sur le groupe volant/colonne de direction (13), l'intensité dudit couple variant en fonction de la valeur du rapport entre le moment de basculement (Mᵣ) et le moment de stabilisation (Mₛ).

5. Système de sécurité selon l'une quelconque des revendications précédentes, **caractérisé en ce que** l'unité logique et de calcul (30) communique avec le contrôleur (17) pour réduire la vitesse du chariot (2) en fonction de la valeur du rapport entre le moment de basculement (Mᵣ) et le moment de stabilisation (Mₛ).

6. Système de sécurité selon l'une quelconque des revendications précédentes, **caractérisé en ce que** l'unité logique et de calcul (30) est intégrée dans l'unité de commande (15).

7. Système de sécurité selon l'une quelconque des revendications précédentes, **caractérisé en ce qu'**il comprend un tableau de commande (31), intégré dans l'unité logique et de calcul (30), qui convertit le nombre de tours du groupe volant-colonne de direction (13) en une commande pour activer les moyens actionneurs (14).

8. Système de sécurité selon l'une quelconque des revendications précédentes, **caractérisé en ce que** les moyens actionneurs (14) sont mécaniquement isolés du groupe volant-colonne de direction (13).

9. Système de sécurité selon l'une quelconque des revendications précédentes, **caractérisé en ce que** le contrôleur (17) comporte une interface reliée à un réseau de communication (19) de type bus CAN ou CAN OPEN du chariot (2).

10. Système de sécurité selon l'une quelconque des revendications précédentes, **caractérisé en ce que** les moyens (28) de détermination instantanée de l'angle de braquage comprennent un potentiomètre positionné sur un axe d'articulation du tourillon de l'essieu arrière directeur (5) du chariot (2).

11. Chariot élévateur à contrepoids, **caractérisé en ce qu'**il comprend un système de sécurité selon l'une quelconque des revendications de 1 à 10.
